# EUROPEAN PATENT APPLICATION

(11) **EP 4 749 139 A1**
(43) Date of publication of application: **27.05.2026**
(21) Application number: 25216832.3
(22) Date of filing: 19.11.2025
(51) Int. Cl.: F04D 29/70, F24F 13/28, B01D 46/42, F04D 29/62

(54) **FILTER FAN UNIT**

(30) Priority: 21.11.2024 DE 102024134223
(71) Applicant: MANN+HUMMEL LIFE SCIENCES & ENVIRONMENT HOLDING SINGAPORE PTE. LTD., Singapore 139234 (SG)
(72) Inventor: ALZAGHARI, Milad, 139234 Singapore (SG); KALYANASUNDARAM, Santosh, 139234 Singapore (SG); ANISH, Ritesh, 139234 Singapore (SG)
(74) Representative: Mann + Hummel Intellectual Property

(57) **Abstract**

The invention relates to a filter fan unit (1) comprising a housing (10); a fan (30) arranged in the housing (10) and serving to generate an air flow from an air inlet (11) to an air outlet (12) of the housing (30); a filter (40) arranged at the air outlet (12); and a holding mechanism (50) with at least a first rod (53) and a movable shift unit (51) which is connected to an inner end (58) of the first rod (53), wherein in a locking position of the shift unit (51) an outer end (60) of the first rod (53) projects from the housing (10) with a protruding length (61), in order for the housing (10) to be able to be supported on a retaining bar (101, 102) of a ceiling grid (100), and wherein in a mounting position of the shift unit (51) the protruding length (61) is smaller than in the locking position or is equal to zero. The invention is characterised in that the holding mechanism (50) has stop means by which the locking position is determined. The invention also relates to the housing (10) of the filter fan unit (1).

## Description

The invention relates to a filter fan unit that can be used in a ceiling of a clean room.

EP 1 798 492 A2 discloses a filter fan unit comprising a housing and a fan. The fan is arranged in the housing and is used to generate an air flow from an air inlet to an air outlet of the housing. Furthermore, the filter fan unit comprises a filter that is arranged at the air outlet. When the filter fan unit is in the operating position, air flows through the filter fan unit from the ceiling into the cleanroom and is extracted from the cleanroom in a lower area.

Exyte Technology GmbH offers such a filter fan unit, which is also equipped with a holding mechanism. The holding mechanism makes it possible to insert the filter fan unit into a cleanroom ceiling grid from below, i.e. from the cleanroom side. The holding mechanism also enables the filter to be replaced from the cleanroom side.

The holding mechanism has a first rod and a movable shift unit in the form of a rotating disc. An inner end of the first rod is connected to the rotating disc. In a locking position of the rotating disc, an outer end of the first rod protrudes from the housing with a protruding length. In a mounting position of the rotating disc, the protruding length of the outer end of the first rod is smaller or equal to zero. In order to be able to insert the filter fan unit into a grid array of the ceiling grid from below, the rotating disc is first brought into the mounting position. The filter fan unit can then be inserted into the grid array of the ceiling grid from below with the aid of a lifting device. During the vertical upward movement, the housing is guided past the retaining bars of the ceiling grid. If the filter fan unit is now in the grid array and is still held from below by the lifting device, the rod is now moved outwards by turning the rotating disc so that its outer end protrudes from the housing. When the filter fan unit is lowered again slightly by the lifting device, the outer end of the first rod now comes into contact with the retaining bar. The housing is thus supported by the first rod on the ceiling grid.

The rotating disc must be rotated from the installation or mounting or holding position to the locking position when the holding device holds the filter fan unit in position within the grid array. This involves a certain amount of effort, as the installer responsible usually has to stand on a ladder to turn the rotating disc by hand. The installer has to turn the rotating disc by a certain angle so that the outer end of the first rod protrudes from the housing with sufficient protruding length to rest securely on the relevant retaining bar when the lifting device is lowered again. Turning the rotating disc is difficult, as the installer has to work overhead and ensure the correct angle of rotation.

The invention is based on the object to provide a filter fan unit that can be easily inserted into a ceiling grid in the ceiling area of a clean room.

The object the invention is solved by the combination of features according to claim 1. Embodiments of the invention can be taken from the subclaims to claim 1.

According to the invention, the holding mechanism has stop means by which the locking position is determined. In one embodiment, the mounting position is also determined by the stop means. If the installer wishes to move the shift unit from the mounting position to the locking position, he must now move the shift unit to a first end stop. When this clearly perceptible end stop is reached, the installer can be sure that the locking position has been reached and that the outer end of the first rod protrudes from the housing with a sufficiently protruding length to be able to be supported on the ceiling grid. The invention thus makes ceiling installation of the filter fan unit easier and safer.

In addition to the first end stop, the stop means can have a second end stop, which determines the mounting position of the shift unit. The shift unit can therefore only be moved between the first end stop and the second end stop. During disassembly, the installer can simply move the shift unit from the locking position until the second end stop is reached. The installer thus ensures that the first rod is retracted into the housing to such an extent that the outer end of the first rod does not catch on the retaining bar when the filter fan unit is lowered, thereby delaying disassembly.

The stop means can have an elongated hole and a bolt that engages through the elongated hole. The bolt is movable within the elongated hole, whereby the invention leaves open whether the bolt, the elongated hole or the bolt and the elongated hole perform an absolute movement.

In one embodiment, the bolt is firmly connected to the housing. This means that the bolt is stationary and only the part of the stop means in which the elongated hole is formed moves. Alternatively, the bolt can be permanently connected to the movable shift unit, in which case the elongated hole is fixed. In another alternative, the bolt can be permanently connected to the movable shift unit and only the part of the stop means in which the elongated hole is formed moves. In yet another alternative, the stop means can include a bolt permanently connected to the movable shift unit and a catch that engages the bolt at the first end stop and the second end stop.

In one embodiment, the elongated hole has a width that is slightly larger than the outer diameter of the bolt. There is therefore only a small clearance between the bolt and the elongated hole, which enables good lateral guidance. The ends of the elongated hole can be rounded so that the bolt, which is round in cross-section, can essentially rest against the entire surface of each end of the elongated hole.

The shift unit can be designed as a rotating disc that is mounted to rotate around an axis of rotation. The rotating disc can be turned from the locking position to the mounting position and back again by rotating it around the axis of rotation. The rotating disc can be a circular plate with a diameter of 3 to 12 cm. In one embodiment, the diameter is 5 to 10 cm. The thickness of the rotating disc can be 2 to 12 mm. The disc can be made of plastic or metal (sheet metal).

In the case of a rotating disc, a longitudinal axis of the elongated hole is preferably an arc of a circle that extends over a certain angle of rotation. For example, if the arc of a circle extends over 45°, the angle between the first end stop and the second end stop is 45°. Accordingly, the angle of rotation between the locking position and the mounting position is 45°. The angle of rotation can assume values between 20 and 60°, preferably values between 30 and 50°. Alternatively, the longitudinal axis of the elongated hole can also be straight or bent.

In one embodiment, the shift unit or the rotating disc is rotatably attached to an air distribution plate on the outlet side. The air distribution plate may be proximate or near the air outlet. The air distribution plate may be a plate having perforations to distribute air throughout the filter fan unit and/or into the clean room. As the air outlet of the filter fan unit is directed downwards in the ceiling of the clean room, the rotating disc is easy to reach from the clean room.

A spacer can be provided between the shift unit, e.g. the rotating disc, and the air distribution plate, which defines a distance between the shift unit and the air distribution plate. The air distribution plate preferably extends parallel to the rotating disc. The distance can be 2 to 6 cm. In one embodiment, the resulting free space or gap between the air distribution plate and the shift unit is used to connect the inner end of the first rod to the shift unit. The first rod thus lies in a plane between the plane of the air distribution plate and the plane in which the shift unit lies.

The shift unit or the rotating disc can be firmly connected to a hand grip. The hand grip, for example a wing nut or a hand knob, can be used to manually apply torque to the shift unit in order to turn it. In one embodiment, the wing nut is welded to a metal rotating disc.

The holding mechanism can have a second rod with an inner end and an outer end, the inner end being connected to the shift unit and the outer end projecting from the housing with a protruding length when the shift unit is in the locking position.

The outer end of the first rod can protrude out of the housing at a first side wall of the housing, while the outer end of the second rod protrudes out of the housing at a second side wall of the housing. The first side wall and the second side wall can face each other. Preferably, in the embodiment with the rotating disc, a first attachment point, at which the first rod is attached to the rotating disc, and a second attachment point, at which the second rod is attached to the rotating disc, are offset by 180°.

The holding mechanism can have a third rod and a fourth rod, whereby the respective inner end of each rod is also attached to the shift unit. The attachment between the rotating disc and the inner end of the respective rod must allow a certain amount of movement between the rod and the rotating disc, as the rod does not perform a pure rotary movement like the rotating disc, but a movement like the connecting rod in a crank drive. With four rods, the filter fan unit rests on the ceiling grid at four different points.

In one embodiment, the holding mechanism can have exactly one shift unit. In this case, all rods of the holding mechanism are connected to this single shift unit. If the shift unit is designed as a rotating disc, the attachment points between the rotating disc and the rod can be offset by 90°. An angle between the first rod and the third rod can then preferably be 90°. The advantage of only one shift unit is that all four rods can be moved simultaneously with a single rotary movement.

In an alternative embodiment, the holding mechanism has two shift units, with the first rod and the second rod being connected to one shift unit and the third rod and the fourth rod being connected to the other shift unit. The first rod and the third rod can run essentially parallel and at a distance from each other and protrude from the housing at the first side wall of the housing. The second rod and the fourth rod can project out of the housing on the second side wall opposite the first side wall when the two shift units are each in the locking position.

According to another aspect of the invention, there is provided a housing of a filter fan unit according to claim 14. Embodiments of this aspect can be taken from the subclaim(s) to claim 14. The housing can accommodate a filter on the outlet side, or near or proximate the air outlet.

The invention is explained in more detail with reference to the embodiments shown in the drawing. It is shown in:
- Figure 1: a perspective view of a filter fan unit;
- Figure 2: the filter fan unit of Figure 1 with one half cut away;
- Figure 3: the filter fan unit from below;
- Figure 4: the filter fan unit with retracted rods;
- Figure 5: different phases of the integration of the filter fan unit into a ceiling system (Figures 5A, 5B and 5C);
- Figure 6: a shift unit and its attachment to an air distribution plate; and
- Figure 7: another embodiment of the filter fan unit according to the invention.

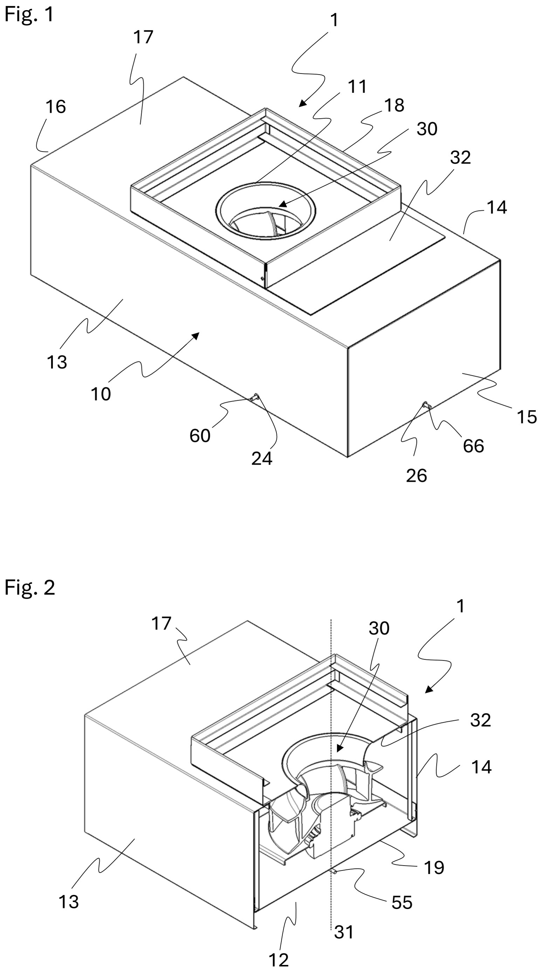

Figures 1 and 2 show a perspective view of a filter fan unit, which is referenced by 1 in its entirety. In Figure 2, one half of the filter fan unit 1 is cut away.

The filter fan unit 1 comprises a housing 10 and a fan 30, which is arranged in the housing 10. The fan 30 is a centrifugal fan. In the operating position of the filter fan unit, an axis of rotation 31 of the radial fan 30 runs in a vertical direction.

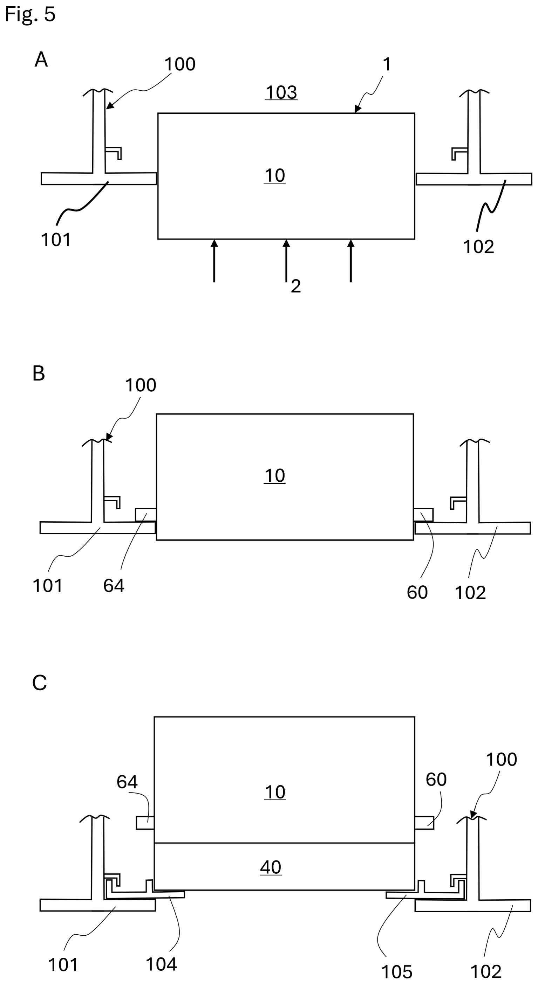

The fan 30 generates an air flow in the housing 10 from an air inlet 11 to an air outlet 12 of the housing 10. A filter 40, which is shown schematically only in Figure 5 and is preferably a HEPA filter, is arranged at the air outlet 12 during operation of the filter fan unit 1.

The housing 10 has a first side wall 13 and a second side wall 14, which is opposite the first side wall 13 (see Figures 1 and 2). The cuboid housing 10 also has a third side wall 15 and a fourth side wall 16, which is opposite the third side wall 15. The side walls 13, 14, 15 and 16 extend from a plane in which a cover 17 with the air inlet 11 is located to a plane in which the air outlet 12 is located.

An opening is provided in the cover 17 into which the fan 30 can be inserted. A support plate 32, which is larger than the opening in the cover 17, is associated with the fan 30. When the fan 30 is installed, the support plate 32 rests on the cover 17 or on the edge of the opening.

A rectangular frame 18 is attached to the cover 17, which serves to hold a prefilter which is not shown. The frame 18 is only shown in figures 1 and 2.

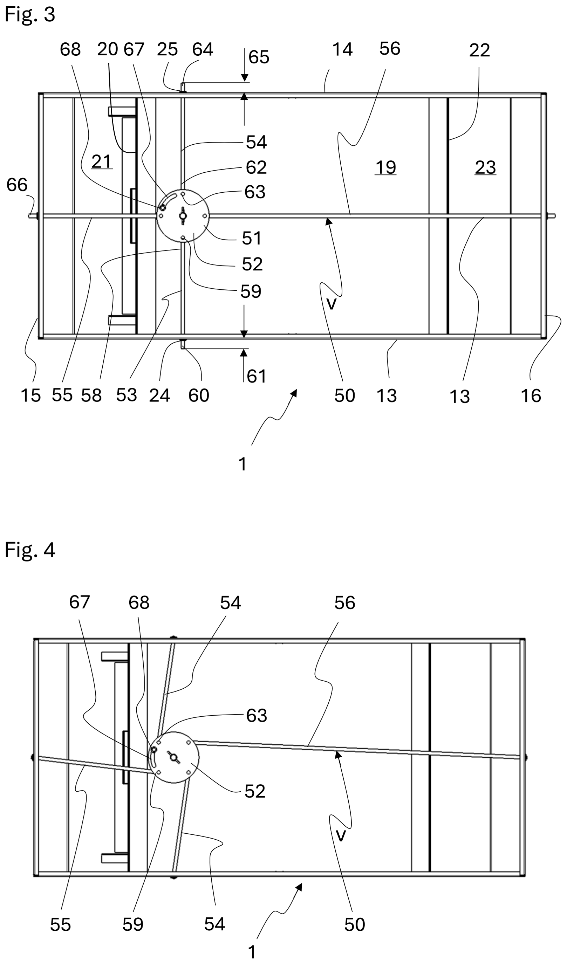

Figure 2 shows an air distribution plate 19 on the outlet side, which extends from the first side wall 13 to the second side wall 14. However, as can be seen in Figure 3, which shows the filter fan unit 1 of Figures 1 and 2 or a slightly modified filter fan unit 1 from below, the air distribution plate 19 does not extend to the third side wall 15 and also not to the fourth side wall 16. Rather, a gap 21 remains between an end edge 20 of the air distribution plate 19 and the third side wall 15, through which the air can flow. A gap 23 is also provided between an end edge 22 and the fourth side wall 16. The air distribution plate 19 can be perforated so that the filter 40, which is arranged below the air distribution plate, is subjected to an approximately uniform flow over its entire crosssectional flow area.

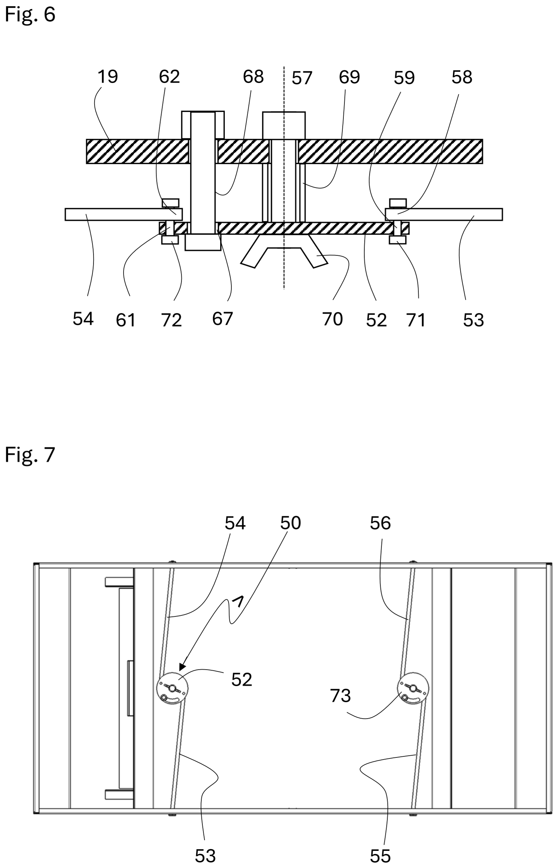

Figure 3 shows a holding mechanism 50, which has a shift unit 51 in the form of a rotating disc 52 as well as a first rod 53 and a second rod 54. Furthermore, the holding mechanism 50 has a third rod 55 and a fourth rod 56. The rotating disc 52, which is shown in section in Figure 6, is rotatably mounted about an axis of rotation 57 (in the illustration in Figure 3, the axis of rotation 57 extends perpendicular to the plane of the drawing).

An inner end 58 of the first rod 53 is hingedly connected to the rotating disc 52 at an attachment point 59. When the rotating disc 52 is in a locking position (see Figure 3), an outer end 60 of the first rod 53 projects with a protruding length 61 beyond the housing 10. The first rod 53 engages through an opening 24 of the first side wall 13. If the rotating disc 52 is rotated counterclockwise from the locking position shown in Figure 3 into a mounting position (see Figure 4), the outer end 60 is pulled into the housing 10. As a result, the protruding length 61 is reduced or becomes zero. By turning from the mounting position in the opposite direction, i.e. clockwise, the locking position can be set again, in which the outer end 60 of the first rod 52 protrudes out of the housing 10 again with the protruding length 61.

The remaining rods 54, 55, 56 are connected to the rotating disc 52 in the same way as the first rod 53, with the corresponding attachment points for neighbouring rods each being offset by 90° on the rotating disc. Thus, the second rod 54 is fastened with an inner end 62 to an attachment point 63, which is arranged offset by 180° relative to the attachment point 59. An outer end 64 of the second rod 54 projects out of the housing 10 with a protruding length 65 through an opening 25 in the second side wall 14. In Figures 1 and 3, an outer end of the third rod 55 is labelled with the reference sign 66. The outer end 66 engages through an opening 26 in the third side wall.

An elongated hole 67 is provided in the rotating disc 52. The elongated hole 67 has a longitudinal axis in the form of an arc. A bolt 68, which is firmly connected to the air distribution plate 19, engages through the elongated hole 67. The angle of rotation of the rotating disc 52 is limited by the interaction of the elongated hole 67 and the bolt 58. In addition, the locking position (see Figure 3) and the mounting position (see Figure 4) are determined by the interaction of slot 67 and bolt 68. In the locking position, the bolt 68 rests against a first end stop of the elongated hole 67. In the mounting position (see Figure 4), the bolt rests against the opposite end of the elongated hole 67, i.e. against a second end stop of the elongated hole 67. The angle of rotation between the first end stop and the second end stop is approximately 45°.

Figure 5 shows various phases of mounting the filter fan unit 1 in a ceiling grid 100. Of the ceiling grid 100, only a lower part of a first retaining bar 101 and a lower part of a second retaining bar 102 are shown. The retaining bars 101, 102 are shown in profile and extend transversely to the plane of the drawing. The retaining bars 101, 102 and two retaining bars extending transversely thereto (not shown in Figure 5) delimit a rectangular grid array 103 of the ceiling grid 100, into which the filter fan unit 1 can be inserted from below by a vertical upward movement 2, for which a lifting device not shown can be used (see Figure 5A).

Once the filter fan unit 1 has reached a sufficient height, the rotating disc 52 is turned by hand into the locking position so that the outer end 60 of the first rod 53 and the outer end 64 of the second rod 54 protrude from the housing 10. The filter fan unit 1 can then be lowered again slightly until the outer ends 60, 64 of the rods 53, 54 come to rest on the retaining bars 101, 102 (see Figure 5B). The weight of the filter fan unit 1 is supported by the ceiling grid 100 via the rods 53, 54.

In order to insert the filter 40 into the ceiling grid 100, the housing 10 must be lifted again, whereby the filter 40 is attached to the housing 10 from below using the lifting device. The package consisting of housing 10 and filter 40 is then lifted until the retaining bars 101, 102 are freely accessible. An additional ledge 104 is then attached to the first retaining bar 101 by angling it in. The second retaining bar 102 is supplemented by an additional ledge 105. The housing 10 and filter 40 are then lowered again until the filter 40 rests on the additional ledges 104, 105 (see Figure 5C).

If the filter 40 is to be replaced, the housing 10 and filter 40 are raised again by the lifting device so that the additional ledges 104, 105 can be removed. After removing the additional ledges 104 and 105 (and after removing the corresponding additional ledges for the transverse retaining bars), the package consisting of housing 10 and filter 40 can then be lowered until the outer ends 60, 64 of the rods 53, 54 rest on the retaining bars 101, 102. With the housing 10 now firmly seated, the filter 40 can now be lowered further on its own and replaced with a new filter. The new filter can then push the housing 10 up again, as described above, until the retaining bars 101, 102 are freely accessible again so that the additional ledges 104, 105 can be fitted. The housing 10 and the new filter can then be lowered again until the filter rests on the additional ledges 104, 105 (Figure 5C).

Figure 6 shows a sectional view of the rotating disc 52 and the air distribution plate 19 arranged above it. The bolt 68 is fixed to the air distribution plate 19. A spacer 69 in the form of a spacer sleeve defines the distance between the rotating disc 52 and the air distribution plate 19. A wing nut 70 is firmly connected to the rotating disc 52. A torque can be manually applied to the rotating disc 52 via the wing nut 70.

Fastening means for the articulated fastening of the inner end 58 of the first rod 53 are provided with the reference sign 71 in Figure 6. The inner end 63 is connected to the rotating disc 52 at the attachment point 62 by fastening means 72.

Figure 7 shows a further embodiment of the holding mechanism 50. The holding mechanism 50 has a further rotating disc 73, the structure of which corresponds to the rotating disc 52. Accordingly, reference is made here to the explanations on the rotating disc 52.

In contrast to the embodiment example of Figures 3 and 4, only the first rod 53 and the second rod 54 are connected to the rotating disc 52. The third rod 55 and the fourth rod 56 are connected to the additional rotating disc 73 in the manner described above. In this embodiment example, the rods 53, 54, 55 and 56 run parallel to one another.

To ensure that the housing is securely supported on the ceiling grid, both rotating discs 52, 73 must be rotated into their respective locking positions. In the embodiment of Figures 3 and 4, only one rotating disc 52 needs to be actuated for this purpose.

### List of reference signs

- 1: filter fan unit
- 2: vertical movement

- 10: filter housing
- 11: air inlet
- 12: air outlet
- 13: first side wall
- 14: second side wall
- 15: third side wall
- 16: fourth side wall
- 17: cover
- 18: frame
- 19: air distribution plate
- 20: end edge
- 21: gap
- 22: end edge
- 23: gap
- 24: opening
- 25: opening
- 26: opening

- 30: fan
- 31: axis of rotation
- 32: support plate

- 40: filter

- 50: holding mechanism
- 51: shift unit
- 52: rotating disc
- 53: first rod
- 54: second rod
- 55: third rod
- 56: fourth rod
- 57: axis of rotation
- 58: inner end
- 59: attachment point
- 60: outer end
- 61: protruding length
- 62: inner end
- 63: attachment point
- 64: outer end
- 65: protruding length
- 66: outer end
- 67: elongated hole
- 68: bolt
- 69: spacer piece (spacer sleeve)
- 70: wing nut
- 71: fasteners
- 72: fasteners
- 73: additional rotating disc

- 100: ceiling grid
- 101: first retaining bar
- 102: second retaining bar
- 103: grid array
- 104: additional ledge
- 105: additional ledge

## Claims

1. Filter fan unit (1), comprising:
- a housing (10)
- a fan (30), which is arranged in the housing (10) and serves to generate an air flow from an air inlet (11) to an air outlet (12) of the housing (30);
- a filter (40), which is arranged at the air outlet (12),
- a holding mechanism (50) with at least a first rod (53) and a movable shift unit (51) which is connected to an inner end (58) of the first rod (53),
wherein, in an locking position of the shift unit (51), an outer end (60) of the first rod (53) projects from the housing (10) with a protruding length (61) in order for the housing (10) to be able to be supported on a retaining bar (101, 102) of a ceiling grid (100), and wherein, in a mounting position of the shift unit (51), the protruding length (61) is smaller than in the locking position or is equal to zero, **characterised in that** the holding mechanism (50) has stop means by means of which the locking position is determined.

2. Filter fan unit (1) according to claim 1, **characterised in that** the stop means determine the mounting position.

3. Filter fan unit (1) according to claim 1 or 2, **characterised in that** the stop means have an elongated hole (67) and a bolt (68) which engages through the elongated hole (67) and can be moved relative to the elongated hole (67).

4. Filter fan unit (1) according to claim 3, **characterised in that** the bolt (68) is firmly connected to the housing (10).

5. Filter fan unit (1) according to one of claims 1 to 4, **characterised in that** the shift unit (51) is designed as a turning device (52) mounted rotatably about an axis of rotation (57).

6. Filter fan unit (1) according to claim 5, **characterised in that** the turning device (53) is rotatably attached to an air distribution plate (19) near the air outlet (12).

7. Filter fan unit (1) according to claim 6, **characterised in that** a spacer (69) defines a distance between the turning device (52) and the air distribution plate (19).

8. Filter fan unit (1) according to one of claims 5 to 7, **characterised in that** the turning device (59) is firmly connected to a hand grip.

9. Filter fan unit (1) according to one of claims 1 to 8, **characterised in that** the holding mechanism (50) has a second rod (54) with an inner end (62) and an outer end (64), the inner end (62) being connected to the shift unit (51) and the outer end (64) projecting out of the housing (10) with a protruding length (65) when the shift unit (51) is in the locking position.

10. Filter fan unit (1) according to claim 9, **characterised in that** the outer end (60) of the first rod (53) projects from a first side wall (13) of the housing (10) and the outer end (64) of the second rod (54) projects from a second side wall (14) of the housing (10), the first side wall (13) and the second side wall (14) being opposite one another.

11. Filter fan unit (1) according to claim 9 or 10, **characterised in that** the holding mechanism (50) has a third rod (55) and a fourth rod (56).

12. Filter fan unit (1) according to one of claims 1 to 11, **characterised in that** the holding mechanism (50) has exactly one shift unit (52).

13. Filter fan unit (1) according to claims 11 and 12, **characterised in that** the first rod (53) and the third rod (55) form an angle of 90°.

14. A housing (10) of a filter fan unit (1), comprising:
- a fan (30), which is arranged in the housing (10) and serves to generate an air flow from an air inlet (11) to an air outlet (12) of the housing (30);
- a holding mechanism (50) with at least a first rod (53) and a movable shift unit (51) which is connected to an inner end (58) of the first rod (53),
wherein, in an locking position of the shift unit (51), an outer end (60) of the first rod (53) projects from the housing (10) with a protruding length (61) in order for the housing (10) to be able to be supported on a retaining bar (101, 102) of a ceiling grid (100), and wherein, in a mounting position of the shift unit (51), the protruding length (61) is smaller than in the locking position or is equal to zero, **characterised in that** the holding mechanism (50) has stop means by means of which the locking position is determined,
wherein the housing (10) can accommodate a filter (40) near the air outlet (12).

15. The housing (10) according to claim 14, wherein the holding mechanism (50) is arranged between the fan (30) and the filter (40).
